(19) Europäisches Patentamt
European Patent Office
Office européen des brevets

(11) Veröffentlichungsnummer: 0 194 454
A1

# (12) EUROPÄISCHE PATENTANMELDUNG

(21) Anmeldenummer: 86101753.1

(22) Anmeldetag: 12.02.86

(51) Int. Cl.[4]: C 08 G 69/12

(30) Priorität: 21.02.85 DE 3505903

(43) Veröffentlichungstag der Anmeldung: 17.09.86 Patentblatt 86/38

(84) Benannte Vertragsstaaten: DE FR GB IT

(71) Anmelder: BAYER AG
Konzernverwaltung RP Patentabteilung
D-5090 Leverkusen 1 Bayerwerk(DE)

(72) Erfinder: Spies, Manfred
Friedrich-Ebert-Strasse 111
D-3550 Marburg(DE)

(72) Erfinder: Strohriegl, Peter, Dr.
Bayreutherstrasse 15a
D-8581 Hummeltal(DE)

(72) Erfinder: Heitz, Walter, Prof.Dr.
Am Schmidtborn 5
D-3575 Kirchhain(DE)

## (54) Verfahren zur Herstellung von Polybenzamiden.

(57) Die Erfindung betrifft ein Verfahren zur Herstellung von Polybenzamiden aus Aminobezoesäuren in Gegenwart von Metallhalogeniden.

EP 0 194 454 A1

Croydon Printing Company Ltd.

BAYER AKTIENGESELLSCHAFT 5090 Leverkusen, Bayerwerk
Konzernverwaltung RP
Patentabteilung Eck/AB-c

Verfahren zur Herstellung von Polybenzamiden

Die Erfindung betrifft ein Verfahren zur Herstellung von Polybenzamiden aus Aminobenzoesäuren in Gegenwart von Metallhalogeniden.

Polybenzamide sind bekannt. Ihre Herstellung gelingt entweder nach einem mehrstufigen Verfahren (z.B. S.L. KWOLEK; Macromolecules 10, 1390-96 1977) oder mit relativ teuren Phosphorverbindungen (z.B. N.YAMAZAKI, M.MATSUMOTO, F.HIGASHI; Journ. Polym. Sci.:Polym.Chem. Ed. 13, 1373-80 (1975), N.YAMAZAKI, F.HIGASHI; Advances in Polymer Science 38, 1-25 (1981), F.HIGASHI, Y.AOKO, Y.TAGUCHI; Makrom.Chem.; Rapid Commun. 2, 329-31 (1981), G.WU, N.OGATI; Journ.Polym.Sci.: Polym. Letters Ed. 19, 343-45 (1981).

Es wurde nun gefunden, daß sich Polybenzamide in einen einfachen einstufigen Verfahren herstellen lassen, das außerdem noch den Einsatz teurer Phosphorverbindungen vermeidet, wenn man Aminobenzoesäuren in Gegenwart von Halogeniden von Elementen der 3. und 4. Hauptgruppe so

wie der 4. Nebengruppe des Periodensystems der Elemente nach Mendeleyev (Hofmann Rüdorff, Anorganische Chemie, S.97, 19. Auflage, 1966, Vieweg Verlag, Braunschweig) polykondensiert.

Gegenstand der Erfindung ist daher ein Verfahren zur Herstellung von Polybenzamiden durch Polykondensation von Aminobenzoesäuren der Formeln (Ia) und/oder (Ib)

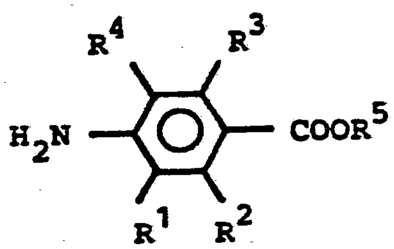

,

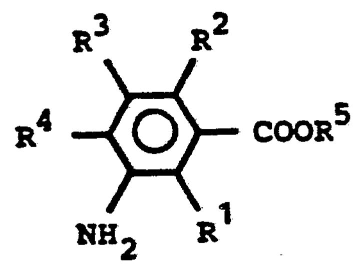

(Ia) (Ib)

in welcher

$R^1$ bis $R^4$ für Wasserstoff, einen $C_1$-$C_{20}$-Alkyl, $C_5$-$C_{10}$-Cycloalkyl, $C_6$-$C_{14}$-Aryl, $C_7$-$C_{20}$-Aralkylrest stehen, die direkt oder über O, N, P, S mit dem Aromaten verknüpft sein können, Halogen

und

$R^5$ für $C_1$-$C_8$-Alkyl, $C_5$-$C_{10}$-Cycloalkyl, $C_6$-$C_{14}$-Aryl, $C_7$-$C_{15}$-Aralkyl und Wasserstoff steht,

dadurch gekennzeichnet, daß die Polymerisation in Gegenwart von Halogeniden der 3. und 4. Hauptgruppe sowie der 4. Nebengruppe des Periodensystems ausgeführt wird.

Das erfindungsgemäße Verfahren läuft einstufig und ohne Verwendung von Phosphorverbindung ab.

Bei der Umsetzung werden Gemische aus Polybenzamiden und Oxiden der Elemente erhalten. Diese Gemische können direkt weiterverarbeitet werden. Durch Mischoxidbildung können die Eigenschaften dieser Materialien variiert werden.

Eine Abtrennung der Oxide ist ebenfalls möglich. Sie kann entweder, z.B. im Falle des $TiO_2$, durch Lösen des Polymeren in N-Methylpyrrolidon/LiCl, Abfiltrieren des $TiO_2$ und Ausfällen des Polyamids oder, z.B. im Falle des $B_2O_3$, durch Lösen des Reaktionsgemischs in konzentrierter Schwefelsäure und Ausfällen im Wasser erfolgen.

Als Halogenide können verwendet werden Fluoride, Chloride, Bromide und Jodide, vorzugsweise Chloride von Elementen der 3. (B, Al, Ga) und 4. Hauptgruppe (Si, Ge) sowie der 4. Nebengruppe (Ti, Zr) des Periodensystems, vorzugsweise $BCl_3$, $AlCl_3$, $GeCl_4$, $TiCl_4$ und $ZrCl_4$. Sie können einzeln oder im Gemisch verwendet werden, mit der Maßgabe, daß $SiCl_4$ nur im Gemisch verwendet wird.

Pro Mol Aminobenzoesäure werden 0,5 bis 2 Mol, vorzugsweise 0,5 bis 1 Mol Halogenid verwendet.

Die Umsetzung wird bei einer Temperatur von 60 bis 250° C, vorzugsweise 100 bis 220° C, ausgeführt. Es kann gegebenenfalls unter einem Überdruck bis zu 10 bar umgesetzt werden.

Die Umsetzung kann in einem geeigneten Lösungsmittel ausgeführt werden, z.B. in einem tertiären aromatischen Stickstoffheterocyclus wie Pyridin, Picolin, Lutidin, Chinolin und Isochinolin sowie in üblichen bekannten Lösungsmitteln für aromatische Polyamide, z.B. N-Methylpyrrolidon, HMPT, N.N-Dimethylacetamid, gegebenenfalls unter Zusatz von Lithium- oder Calciumsalzen. Gemische dieser Lösungsmittel sowie Gemische dieser Lösungsmittel mit unter den Reaktionsbedingungen inerten Lösungsmitteln wie Halogenkohlenwasserstoffen, z.B. Chlorbenzol und aliphatischen Kohlenwasserstoffen wie Decan können ebenfalls eingesetzt werden.

Die Wahl der Temperatur kann in Abhängigkeit vom Lösungsmittel erfolgen; bei Temperaturen über dem Siedepunkt des Lösungsmittels kann die Anwendung von Druck erforderlich sein.

Die erfindungsgemäße Umsetzung kann durch folgende Reaktionsgleichungen beschrieben werden:

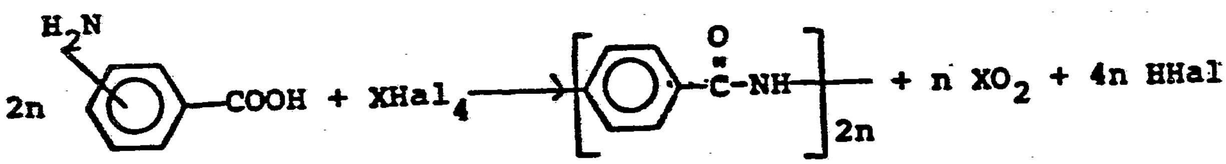

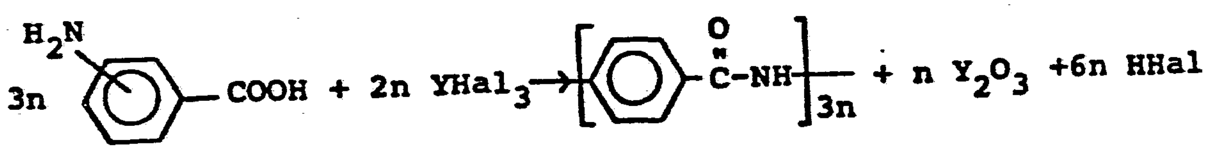

mit Y = Element der 3. Hauptgruppe und
X = Element der 4. Hauptgruppe sowie der 4. Nebengruppe.

Die Reaktion führt zu Polyamiden mit Polymerisationsgraden von 2 bis etwa 400, bevorzugt von 5 bis etwa 200.

Die Regulierung des Molekulargewichts kann durch das jeweils eingesetzte Molverhältnis Aminobenzoesäure zu Halogenid beeinflußt werden. Die erzielten Molekulargewichte werden über die inhärenten Viskositäten ermittelt, welche bei 30° C an Lösungen von 0,05 g Polyamid in 100 ml konzentrierter Schwefelsäure gemessen wurden.

Die erfindungsgemäß erhaltenen Polybenzamide können in bekannter Weise z.B. zu Folien und Fasern verarbeitet werden.

Lösungen der erfindungsgemäß hergestellten Polybenzamide in geeigneten Lösungsmitteln (z.B. $H_2SO_4$, LiCl/Dimethylacetamid) zeigen u.a. ein anisotropes Verhalten. Diese Eigenschaft läßt sich z.B. bei der Herstellung von orientierten Fasern oder Folien vorteilhaft verwenden. Die Fasern können auf Grund der hohen Temperaturbeständigkeit und Stabilität bei hohen Temperaturen bis ca. 300° C und den Modulwerten (z.B. Reißfestigkeit) z.B. zu Verbundwerkstoffen verarbeitet werden, welche z.B. auf Einsatzgebieten, die z.B. hohen Verschleiß durch extreme Beanspruchung des Materials bewirken, verwendet werden können (z.B. Flugzeugbau). Sie haben dort bessere Eigenschaften als bekannte Fasern (z.B. Kevlar®-Fasern).

Die nach dem erfindungsgemäßen Verfahren hergestellten Polybenzamide können weiterhin z.B. zu Pulps verarbeitet werden. Diese Pulps bestehen aus einem Kurzfasermaterial mit hohen Festigkeitswerten. Die mit dem erfindungsgemäßen Verfahren hergestellten Polybenzamide können die Oxide aus den als Katalysator verwendeten Metallhalogenide enthalten. In diesem Falle wird das Metalloxid bei der Ausfällung im Pulp fein verteilt und kann so als aktiver oder inerter Füllstoff dienen, der die Eigenschaften des Pulps günstig beeinflußt (z.B. Temperaturbeständigkeit, Reibungskoeffizient usw.).

So können z.B. $SiO_2$-haltige Polybenzamide (bei Verwendung von $SiCl_4$ als Katalysator bei der Herstellung der Polybenzamide) wieder aufgelöst werden, wobei das $SiO_2$ dann in der Lösung suspendiert wird. Aus dieser, suspendiertes $SiO_2$ enthaltenden Lösung können z.B. $SiO_2$-haltige Fasern und Folien hergestellt werden, aus denen z.B. Trägerplatten für z.B. bedruckte Schaltungen hergestellt werden. Die Fasern können vorzugsweise zu Vliesen, Förderbändern, Geweben, temperaturbeständigen Kleidungen, die außerdem als Isolierkleidung geeignet sind, verarbeitet werden. Die Isoliereigenschaften der Gewebe aus solchen Fasern machen sie besonders für Einsatzzwecke bei extremen Temperaturen geeignet (z.B. Feuerwehranzüge, Raumanzüge, Tiefkühlkleidung usw.).

Beispiel A

Kondensation von 4-Aminobenzoesäure mit $TiCl_4$

6.24 g 4-Aminobenzoesäure werden in einem ausgeheizten 100 ml Dreihalskolben mit KPG-Rührer, Rückflußkühler und Septum in 60 ml trockenem Pyridin gfelöst. Bei -15°C gibt man 4 ml Titantetrachlorid zu und erhitzt anschließend für 20 Stunden zum Rückfluß. Zur Aufarbeitung wird das Reaktionsgemisch in 500 ml 2N HCl eingerührt und der Rückstand abgesaugt und gründlich mit $Na_2CO_3$-Lösung, Wasser und Aceton gewaschen. Nach dem Trocknen erhält man 4.31 g eines Gemisches von Poly-(1.4-benzamid) und Titandioxid.

Dieses Gemisch gibt man in 200 ml N.N-Dimethylacetamid/ 8 g LiCl, erhitzt und filtriert anschließend das Titandioxid ab. Das Poly-(1.4-benzamid) wird in Aceton ausgefällt.

| | |
|---|---|
| Ausbeute: | 3.61 g = 67 % |
| inhärente Viskosität: | 0.14 |

Beispiel B

Kondensation von 4-Aminobenzoesäure mit $BCl_3$

4.68 g 4-Aminobenzoesäure werden in einem ausgeheizten 100 ml Dreihalskolben mit KPG-Rührer, Rückflußkühler und Gaszuleitungsrohr in 50 ml trockenem N-Methylpyrrolidon gelöst. Bei -10°C kondensiert man 3.2 g Bortrichlorid ein und erhitzt anschließend für 20 Stunden auf 165°C. Das Produkt wird abgesaugt, mit heißem Wasser und THF gewaschen und getrocknet. Im Produkt verbliebene Borsäure wird durch Umfällen aus konzentrierter Schwefelsäure in Wasser entfernt.

| | |
|---|---|
| Ausbeute: | 3,06 g = 75 % |
| inhärente Viskosität: | 0.25 |

Beispiel C

Kondensation von 4-Aminobenzoesäure mit $SiCl_4$/$TiCl_4$

6,46 g 4-Aminobenzoesäure werden in einem ausgeheizten 100 ml Dreihalskolben mit KPG-Rührer, Rückflußkühler und Septum in 60 ml Pyridin gelöst. Bei -10° C gibt man 2,7 ml $SiCl_4$ und 0,52 ml $TiCl_4$ zu und erhitzt anschließend für 20 Stunden unter Rückfluß.

Zur Aufarbeitung wird das Reaktionsgemisch in 500 ml 2N HCl eingerührt und der Rückstand abgesaugt und gründlich mit $Na_2CO_3$-Lösung sowie mit Wasser und Aceton gewaschen.

Nach dem Trocknen erhält man 8,2 g eines Gemisches aus Poly-(1.4-benzamid), Siliciumdioxid und Titandioxid.

Dieses Gemisch gibt man in 300 ml N,N-Dimethylacetamid/ 12 g LiCl, erhitzt und filtriert anschließend das Siliciumdioxid bzw. Titandioxid ab. Das Poly-(1.4-benzamid) wird mit Aceton/Wasser ausgefällt.

Ausbeute: 3,77 g = 68 %.
inhärente
Viskosität: 0,51

Patentansprüche

1. Verfahren zur Herstellung von Polybenzamiden durch Polykondensation von Aminobenzoesäuren der Formeln (Ia) und/oder (Ib)

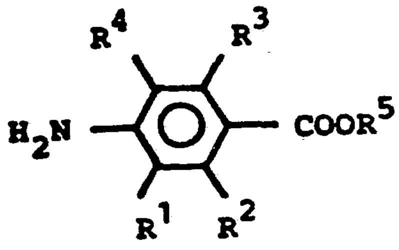

(Ia)

,

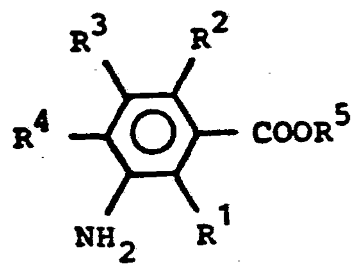

(Ib)

in welcher

$R^1$ bis $R^4$ für Wasserstoff, einen $C_1$-$C_{20}$-Alkyl, $C_5$-$C_{10}$-Cycloalkyl, $C_6$-$C_{14}$-Aryl, $C_7$-$C_{10}$-Aralkylrest stehen, die direkt oder über O, N, P, S mit dem Aromaten verknüpft sein können, Halogen

und

$R^5$ für $C_1$-$C_8$-Alkyl, $C_5$-$C_{10}$-Cycloalkyl, $C_6$-$C_{14}$-Aryl, $C_7$-$C_{15}$-Aralkyl und Wasserstoff steht,

dadurch gekennzeichnet, daß die Polymerisation in Gegenwart von Halogeniden der 3. und 4. Hauptgruppe sowie der 4. Nebengruppe des Periodensystems ausgeführt wird.

2. Verfahren nach Anspruch 1, daß Gemische der Halogenide eingesetzt werden.

3. Verfahren nach Anspruch 1, dadurch gekennzeichnet, daß aromatische heterocyclische Stickstoffbasen als Lösungsmittel eingesetzt werden.

4. Poly-(1.4-benzamide) bzw. Poly-(1.3-benzamide) im Gemisch mit Oxiden von Elementen der 3. und 4. Hauptgruppe und der 4. Nebengruppe erhältlich gemäß den Verfahren der Ansprüche 1-3.

Europäisches Patentamt

# EUROPÄISCHER RECHERCHENBERICHT

0194454

Nummer der Anmeldung

EP 86 10 1753

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| | * Keine Enthaltungen * | | C 08 G 69/12 |
| | ----- | | |
| | | | RECHERCHIERTE SACHGEBIETE (Int Cl 4) |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 16-06-1986 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82